# EUROPEAN PATENT APPLICATION

(11) **EP 4 167 627 A1**
(43) Date of publication of application: **19.04.2023**
(21) Application number: 21848656.1
(22) Date of filing: 29.07.2021
(51) Int. Cl.: H04W 24/02, H04W 28/08, H04W 48/16

(54) **INITIAL ACCESS METHOD AND APPARATUS, TERMINAL AND NETWORK SIDE DEVICE**

(30) Priority: 31.07.2020 CN 202010762014
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Winter, Brandl - Partnerschaft mbB
(86) International application number: PCT/CN2021/109232
(87) International publication number: WO 2022/022636

(57) **Abstract**

This application discloses an initial access method and apparatus, a terminal, and a network-side device. The method includes: receiving a configuration message sent by a network-side device, where the configuration message includes a plurality of initial access resources, and the plurality of initial access resources are configured for different categories of terminals by the network-side device; selecting, from the plurality of initial access resources, an initial access resource corresponding to a category of the terminal; and performing an initial access operation based on the selected initial access resource.

## Description

### CROSS-REFERENCE TO RELATED APPLICATIONS

This application claims priority to Chinese Patent Application No. 202010762014.2, filed in China on July 31, 2020, which is incorporated herein by reference in its entirety.

### TECHNICAL FIELD

This application pertains to the field of communications technologies, and specifically, relates to an initial access method and apparatus, a terminal, and a network-side device.

### BACKGROUND

In new radio (New Radio, NR) currently under development, lite terminals (light/lite UE or reduced capability UE, NR-light/Lite or RedCap UE for short) are introduced to adapt to different application scenarios and needs, and are mainly applicable to wearable devices (Wearable Device), industrial sensors (Industrial Sensor) in factory environments, or video surveillance devices. However, in an NR system, different categories of user terminals (User Equipment, UE) are not distinguished, and all the UEs share the same initial access resources. An excessively large quantity of lite terminals may affect access of ordinary UEs or their performance after access, for example, access failure or increased delay.

### SUMMARY

Embodiments of this application are intended to provide an initial access method and apparatus, a terminal, and a network-side device, to resolve the prior-art problem that performance of different categories of terminals in an initial access process is affected because all terminals share same initial access resources.

To resolve the foregoing technical problem, this application is implemented as follows.

According to a first aspect, an initial access method is provided, applied to a terminal and including: receiving a configuration message sent by a network-side device, where the configuration message includes a plurality of initial access resources, and the plurality of initial access resources are configured for different categories of terminals by the network-side device; selecting, from the plurality of initial access resources, an initial access resource corresponding to a category of the terminal; and performing an initial access operation based on the selected initial access resource.

According to a second aspect, an initial access apparatus is provided, including: a receiving module, configured to receive a configuration message sent by a network-side device, where the configuration message includes a plurality of initial access resources, and the plurality of initial access resources are configured for different categories of terminals by the network-side device; a selecting module, configured to select, from the plurality of initial access resources, an initial access resource corresponding to a category of the terminal; and an execution module, configured to perform an initial access operation based on the selected initial access resource.

According to a third aspect, an initial access method is provided, applied to a network-side device and including: configuring a plurality of initial access resources for different categories of terminals; and sending a configuration message to the different categories of terminals, where the configuration message is used to indicate that the network-side device has configured a plurality of initial access resources for the different categories of terminals.

According to a fourth aspect, an initial access apparatus is provided, including: a configuration module, configured to configure a plurality of initial access resources for different categories of terminals; and a sending module, configured to send a configuration message to the different categories of terminals, where the configuration message is used to indicate that a network-side device has configured a plurality of initial access resources for the different categories of terminals.

According to a fifth aspect, a terminal is provided. The terminal includes a processor, a memory, and a program or instructions stored in the memory and capable of running on the processor, where when the program or instructions are executed by the processor, the steps of the method according to the first aspect are implemented.

According to a sixth aspect, a network-side device is provided. The network-side device includes a processor, a memory, and a program or instructions stored in the memory and capable of running on the processor, where when the program or instructions are executed by the processor, the steps of the method according to the third aspect are implemented.

According to a seventh aspect, a readable storage medium is provided. The readable storage medium stores a program or instructions, and when the program or instructions are executed by a processor, the steps of the method according to the first aspect or the steps of the method according to the third aspect are implemented.

According to an eighth aspect, a chip is provided. The chip includes a processor and a communications interface, the communications interface is coupled to the processor, and the processor is configured to run a program or instructions of a network-side device to implement the method according to the first aspect or the method according to the third aspect.

In the embodiments of this application, after the network-side device sends a configuration message, the terminal may select, from a plurality of initial access resources, an initial access resource corresponding to a category of the terminal, and then performs an initial access operation based on the selected initial access resource. In other words, the terminal may select, from the plurality of initial access resources, the initial access resource corresponding to the category of the terminal, without occupying initial access resources of other categories of terminals. This resolves the prior-art problem that performance of different categories of terminals in an initial access process is affected because all categories of terminals share same initial access resources, thereby achieving the effect of load balance on the network side.

### BRIEF DESCRIPTION OF DRAWINGS

FIG. 1 is a block diagram of a wireless communications system to which embodiments of this application are applicable;
FIG. 2 is a first flowchart of an initial access method according to an embodiment of this application;
FIG. 3 is a second flowchart of an initial access method according to an embodiment of this application;
FIG. 4 is a first schematic structural diagram of an initial access apparatus according to an embodiment of this application;
FIG. 5 is a second schematic structural diagram of an initial access apparatus according to an embodiment of this application;
FIG. 6 is a schematic structural diagram of a communications device according to an embodiment of this application;
FIG. 7 is a schematic diagram of a hardware structure of a terminal implementing an embodiment of this application; and
FIG. 8 is a schematic structural diagram of a network-side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that data used in this way is interchangeable in appropriate circumstances so that the embodiments of this application can be implemented in other orders than the order illustrated or described herein. In addition, objects distinguished by "first" and "second" are generally of one type, and the number of the objects is not limited, for example, there may be one or more objects. In addition, in this specification and claims, "and/or" indicates at least one of connected objects, and the character "/" generally indicates an "or" relationship between associated objects.

It should be noted that the technologies described in the embodiments of this application are not limited to long term evolution (Long Term Evolution, LTE)/LTE-advanced (LTE-Advanced, LTE-A) systems, and may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technologies described herein may be used in the above-mentioned systems and radio technologies as well as other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communications system.

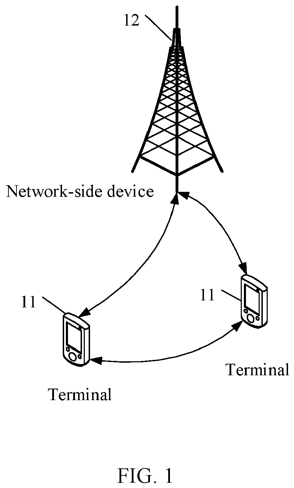

FIG. 1 is a block diagram of a wireless communications system to which embodiments of this application are applicable. The wireless communications system includes a terminal 11 and a network-side device 12. The terminal 11 may also be referred to as a terminal device or a user terminal (User Equipment, UE). The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device) or a vehicle user equipment (Vehicle User Equipment, VUE), or a pedestrian user equipment (Pedestrian User Equipment, PUE). The wearable device includes a wrist band, earphones, and glasses. It should be noted that a specific category of the terminal 11 is not limited in the embodiments of this application. The network - side device 12 may be a base station or a core network, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmission and Reception Point, TRP), or some other appropriate term in the art. As long as the same technical effect is achieved, the base station is not limited to a specific technical term. It should be noted that the base station in the NR system is taken only as an example in the embodiments of this application, but a specific category of the base station is not limited.

The following describes in detail an initial access method provided in the embodiments of this application through specific embodiments and application scenarios thereof with reference to the accompanying drawings.

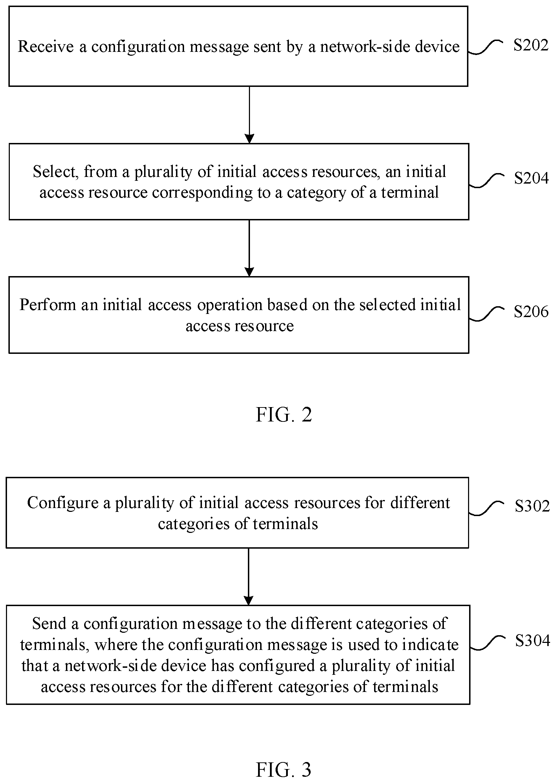

An embodiment of this application provides an initial access method applied to a terminal. FIG. 2 is a first flowchart of an initial access method according to an embodiment of this application. As shown in FIG. 2, steps of the method include:
Step S202. Receive a configuration message sent by a network-side device, where the configuration message includes a plurality of initial access resources, and the plurality of initial access resources are configured for different categories of terminals by the network-side device.
Step S204. Select, from the plurality of initial access resources, an initial access resource corresponding to a category of the terminal.
Step S206. Perform an initial access operation based on the selected initial access resource.

In the foregoing steps S202 to S206, after a network-side device sends a configuration message, the terminal may select, from a plurality of initial access resources, an initial access resource corresponding to a category of the terminal, and then performs an initial access operation based on the selected initial access resource. In other words, the terminal may select, from the plurality of initial access resources, the initial access resource corresponding to the category of the terminal, without occupying initial access resources of other categories of terminals. This resolves the prior-art problem that performance of different categories of terminals in an initial access process is affected because all categories of terminals share same initial access resources, thereby achieving the effect of load balance on the network side.

Optionally, the terminal in this embodiment of this application may include a first-category terminal and a second-category terminal. In a specific application scenario, the first-category terminal may be a lite (Reduced Capability, Red Cap, or Light/Lite) terminal, and the second-category terminal may be an ordinary terminal, where the ordinary terminal may be understood as a non-lite terminal, or an ordinary-category terminal defined in Rel 15 or Rel 16.

NR-Light/RedCap: In 5G NR under development, lite terminals are introduced to adapt to different application scenarios and needs, and are mainly applicable to wearable devices (Wearable Device), industrial sensor terminals (Industry Sensor) in a factory environment, or video surveillance devices. Such terminals are generally some devices with limited capabilities. Its reduced capability is reflected in a plurality of aspects, such as lower device complexity, smaller device size, poorer processing capability, and smaller or less supportable characteristics (the number of supportable carrier aggregation CC, the number of supportable receive antennas, a supported maximum bandwidth, and a supported peak rate).

It should be noted that specific terminal categories of the first-category terminal and the second-category terminal are not limited in this application, and the first-category terminal and the second-category terminal are merely two different categories of terminals in this specification.

In an optional implementation of this embodiment of this application, the initial access resource included in this embodiment of this application includes at least one of the following:
a synchronization signal block SSB (Synchronous Signal Block), a synchronization signal block based measurement timing configuration SMTC (SS block based RRM measurement timing configuration), a search space, a control resource set CORESET (Control-resource set), an uplink bandwidth part BWP (Band Width Part), a downlink bandwidth part BWP, and a reference signal RS.

The configuration message included in this embodiment of this application may be carried by at least one of the following: a physical broadcast channel PBCH (Physical Broadcast Channel), a master information block MIB (Master Information Block), system information of a first SIB (System Information Block), extended system information, and a dedicated RRC (Radio Resource Control) message; where the first SIB is a SIB corresponding to the second-category terminal.

Optionally, the extended system information in this embodiment of this application includes at least one of the following:
(1) system information corresponding to the first-category terminal in a first SIB 1, where the first SIB 1 is a SIB in the first SIB, and the first SIB is the SIB corresponding to the second-category terminal;
(2) system information corresponding to the first-category terminal in a SIBx, where x is an integer greater than 1, the SIBx belongs to a second SIB, and the second SIB is a SIB corresponding to the first-category terminal; and
(3) system information corresponding to the first-category terminal in a SIBy, where y is an integer greater than 1, the SIBy is a SIB in the first SIB, the first SIB is the SIB corresponding to the second-category terminal, and the SIBy includes system information corresponding to the second-category terminal.

The system information corresponding to the first-category terminal in the first SIB1 is used to indicate any one of the following: system information supporting the first-category terminal; and system information allowing access or camping of the first-category terminal.

The system information supporting the first-category terminal may further indicate system information supporting access or camping of the first-category terminal. The system information corresponding to the first-category terminal in the SIBx and SIBy is used to indicate system information required by the first-category terminal for accessing a cell in which the first-category terminal is located.

Optionally, in a case that a terminal selecting the initial access resource is a first-category terminal, the manner of selecting, from the plurality of initial access resources, an initial access resource corresponding to a category of the terminal involved in step S204 in this embodiment of this application includes at least one of the following:
Manner 1: Select, from the plurality of initial access resources, an initial access resource corresponding to the first-category terminal, where the initial access resource selected by the first-category terminal is different from an initial access resource selected by the second-category terminal.

For manner 1, the first-category terminal selecting, from the plurality of initial access resources, an initial access resource corresponding to the first-category terminal, means that different categories of terminals select their corresponding initial access resources. For terminals in a specific application scenario, an ordinary terminal may select an SSB1, and a lite terminal may select an SSB2; or an ordinary terminal may select a wideband BWP, and a lite terminal may select an initial BWP of a narrowband. In such manner, different categories of terminals can be prevented from using same initial access resources.

Manner 2: Based on an attribute of the first-category terminal, select a corresponding initial access resource from the plurality of initial access resources, where the attribute of the first-category terminal includes at least one of the following: capability (capability) of the first-category terminal, capability set (capability set) of the first-category terminal, feature (feature/functionality) of the first-category terminal, feature set (feature/functionality set) of the first-category terminal, category (category) of the first-category terminal, type (type) of the first-category terminal, application scenario (application scenario) of the first-category terminal, and subscription information (subscription information) of the first-category terminal.

It should be noted that the foregoing category of terminal generally corresponds to the category (category) defined in the protocol, and may be defined according to the feature set, the capability set, or different data rates (for example, data rate), for example, cat. 1 and cat.2. Different types (type) may also be defined according to the feature set, the capability set, or different data rates; or different types of a same category may correspond to different types, for example, high-end terminal (high end UE) and low-end terminal (low end UE). For different application scenarios (application scenario), different categories or different types may correspond to different application scenarios, or may be terminals of a same category or a same type being in different application scenarios (application scenario), for example, wearables (wearable device) for personal services and industrial sensors (industrial sensor) in the industrial field. Low-end UEs may be further classified into low-end wearables and low-end industrial sensors. The foregoing subscription information is generally subscription information of UE, for example, corresponding subscription information for an operator in a SIM card, and includes at least one of the following: a SIM card category, a SIM card service category, SIM card fee charge information, a SIM card priority, or a customer level of the operator. Different initial access resources may be configured to correspond to different subscription information.

For manner 2, in a specific application scenario, the first-category terminal may be a terminal with a bandwidth capability of less than 100 MHz, or with an antenna quantity capability of less than 4, equal to 2, or equal to 1, or with a peak rate capability of less than 100 Mbps, or with a processing delay capability of less than a preset time, or with a supported carrier quantity capability of less than a preset value, or with a transmit power capability of less than a preset value. Certainly, the attributes of the first-category terminal are merely examples, and the foregoing attribute values of the first-category terminal may be set or adjusted based on needs. In other words, terminals of one category may further select corresponding initial access resources based on their attribute values.

The first-category terminal may alternatively be a terminal of a specific category (category) (for example, a lite terminal), or a terminal of a specific type (type) (for example, a lite terminal of a specific type, such as low-end or high-end UE), or a terminal in a specific application scenario (for example, a low-end terminal in a wearable application scenario, a high-end terminal in a wearable application scenario, a low-end terminal as an industrial sensor, or a high-end terminal for industrial monitoring), or a terminal with specific subscription information (for example, a terminal for subscription of a wearable device such as a watch, or a terminal for subscription of the industrial field).

Manner 3: According to a correspondence between identifiers of the first-category terminals and initial access resources, select a corresponding initial access resource from the plurality of initial access resources.

For manner 3, a specific application scenario may be that an identifier UE_ID of the first-category terminal includes at least one of the following: all or some bits of IMSI, IMEI, S-TMSI, TMSI, P-TMSI, Configured ID, Resume ID, C-RNTI, or the like. Based on this, an initial BWP for an initial access related operation of the first-category terminal is equal to UE_ID mode N, where N is the number of initial BWPs for the initial access related operation of the first-category terminal; and a relationship between other initial access resources and the identifiers of the first-category terminals is similar thereto.

Manner 4: Based on a preset weight of the first-category terminal on a corresponding initial access resource, select an initial access resource with a preset weight greater than a preset threshold from the plurality of initial access resources.

For manner 4, there is a relatively large probability that an initial access resource with a higher weight is selected as the initial BWP for the initial access related operation of the first-category terminal.

Manner 5: Select, from the plurality of initial access resources, an initial access resource whose preset weight is greater than the preset threshold and that satisfies the correspondence.

For manner 5, it should be noted that the initial access resource with the preset weight greater than the preset threshold may be first determined based on the preset weight, and then a required initial access resource is further determined according to a relationship between the initial access resources and the identifiers of the first-category terminals. In other words, the correspondence is the relationship between the initial access resources and the identifiers of the first-category terminals. In this way, the initial access resource may be determined based on the preset weight and UE_ID. This is a combination of the foregoing manner 3 and manner 4.

Manner 6: According to a correspondence between initial access resources and physical cell identifiers PCIs or PLMN (Public Land Mobile Network, public land mobile network) identifiers of cells in which the first-category terminals are located, select a corresponding initial access resource from the plurality of initial access resources.

Manner 6 is similar to manner 3, except that manner 3 is based on the identifier of the first-category terminal, and manner 6 is based on the cell identifier or the PLMN identifier.

It should be noted that, the configuration message in this embodiment of this application further includes a first indication message, and the first indication message is used to indicate a correspondence between the initial access resources and terminal categories. Based on this, in this embodiment of this application, the selecting, from the plurality of initial access resources, an initial access resource corresponding to a category of the terminal includes: selecting, according to the correspondence, an initial access resource corresponding to a category of the terminal. In other words, the first-category terminal may determine a corresponding initial access resource according to the correspondence.

Optionally, the configuration message in this embodiment of this application further includes a second indication message, and the second indication message is used to indicate an initial access resource of the first-category terminal. To be specific, in this application, in addition to the first indication message, the second indication message may be used to implicitly indicate that a cell in which the network is located supports the first-category terminal, or supports access or camping of the first-category terminal.

Optionally, the configuration message in this embodiment of this application further includes a third indication message, and the third indication message is used to indicate an initial access operation to be performed by using an initial access resource of the first-category terminal.

In an optional implementation of this embodiment of this application, the initial access operation included in this embodiment of this application includes at least one of the following: camping, receiving system information, monitoring a paging message, monitoring advance indication information, and random access.

The advance indication information in this embodiment of this application may be one of the following: wake-up signaling, go-to-sleep signaling, DCP (DCI with CRC scrambled by PS-RNTI) signaling, and paging indication. The random access may be initial random access.

In an optional implementation of this embodiment of this application, in a case that a terminal selecting the initial access resource is a first-category terminal, the manner of performing an initial access operation based on the selected initial access resource involved in step S206 may further include: receiving system information and monitoring a paging message based on a selected first initial access resource, and performing random access based on a selected second initial access resource; where the first initial access resource is the same as a resource used for receiving system information and monitoring a paging message by the second-category terminal, and the second initial access resource is different from a resource used for random access of the second-category terminal.

That is, the first-category terminal and the second-category terminal may use a related DL initial BWP, coreset#0, or SSB to receive SI and monitor a paging message, and use different initial access resources for random access, which may be specifically: using different UL initial BWPs to send a preamble (random access preamble) and/or msg.3; and using a same DL initial BWP to receive msg.2 and/or msg.4, or using different DL/UL initial BWPs to perform RACH.

In an optional implementation of this embodiment of this application, in a case that a terminal selecting the initial access resource is a first-category terminal, the performing an initial access operation based on the selected initial access resource involved in step S206 includes: receiving system information based on a selected third initial access resource, and performing random access and monitoring a paging message based on a selected fourth initial access resource; where the third initial access resource is the same as a resource used for receiving system information by the second-category terminal, and the fourth initial access resource is different from a resource used for random access and monitoring a paging message by the second-category terminal.

That is, the first-category terminal and the second-category terminal may use a related DL initial BWP, coreset#0, or SSB to receive SI, and use different initial access resources to monitor a paging message and perform random access, which may be specifically: using different DL initial BWPs to monitor paging messages; using different UL initial BWPs to send a preamble and/or msg.3; using a same DL initial BWP to receive msg.2 and/or msg.4; using different DL initial BWPs to monitor paging messages; or using different DL/UL initial BWPs to perform RACH.

FIG. 2 above describes this application from a terminal side, and the following describes this application from a network-side device.

FIG. 3 is a second flowchart of an initial access method according to an embodiment of this application, applied to a network-side device. As shown in FIG. 3, steps of the method include:
Step S302. Configure a plurality of initial access resources for different categories of terminals.
Step S304. Send a configuration message to the different categories of terminals, where the configuration message is used to indicate that the network-side device has configured a plurality of initial access resources for the different categories of terminals.

In an optional implementation of this embodiment of this application, the configuration message in this embodiment of this application is carried by at least one of the following: a physical broadcast channel PBCH, a master information block MIB, a first system information block SIB, extended system information, and a dedicated RRC message; where
the first SIB is a SIB corresponding to the second-category terminal.

Further, the extended system information includes at least one of the following:
(1) system information corresponding to the first-category terminal in a first SIB 1, where the first SIB1 is a SIB in the first SIB, and the first SIB is the SIB corresponding to the second-category terminal. In a specific application scenario, the system information corresponding to the first-category terminal in the SIB1 may be SIB 1-extend, which indicates that based on an existing SIB1, SIB1 system information is additionally extended to indicate supporting the first-category terminal being allowed, supporting access or camping of the first-category terminal being allowed, or access of the first-category terminal being allowed.
(2) system information corresponding to the first-category terminal in a SIBy, where y is an integer greater than 1, the SIBy is a SIB in the first SIB, the first SIB is the SIB corresponding to the second-category terminal, and the SIBy includes or does not include system information corresponding to the second-category terminal.

In a specific application scenario, the SIBx may be SIB2-light, SIB3-light, SIB4-light, ..., or SIBn-light different from existing SIB2, SIB3, SIB4, ..., or SIBn.

(3) system information corresponding to the first-category terminal in a SIBx, where x is an integer greater than 1, the SIBx belongs to a second SIB, and the second SIB is a SIB corresponding to the first-category terminal.

That is, the SIBx may be SIB2-light, SIB3-light, SIB4-light, ..., or SIBn-light different from existing SIB2, SIB3, SIB4, ..., or SIBn, or may be an independent SIBx.

Optionally, the system information corresponding to the first-category terminal in the first SIB1 is used to indicate any one of the following: system information supporting the first-category terminal; and system information allowing access or camping of the first-category terminal.

Optionally, the system information corresponding to the first-category terminal in the SIBx and SIBy is used to indicate system information required by the first-category terminal for accessing a cell in which the first-category terminal is located.

Optionally, the configuration message in this embodiment of this application further includes at least one of a first indication message, a second indication message, and a third indication message, where the first indication message is used to indicate a correspondence between the initial access resources and terminal categories, the second indication message is used to indicate an initial access resource of the first-category terminal, and the third indication message is used to indicate an initial access operation to be performed by using the initial access resource of the first-category terminal.

In the initial access manner in this embodiment of this application, an initial access resource corresponding to a category of the terminal may be selected from the plurality of initial access resources, effectively ensuring that terminals of a specific category quickly access a system without affecting performance of terminals of other categories.

It should be noted that the initial access method provided in this embodiment of this application may be performed by an initial access apparatus or a control module for performing the initial access method in the initial access apparatus. In the embodiments of this application, an initial access apparatus provided in the embodiments of this application is described by using an example in which the initial access apparatus performs the initial access method.

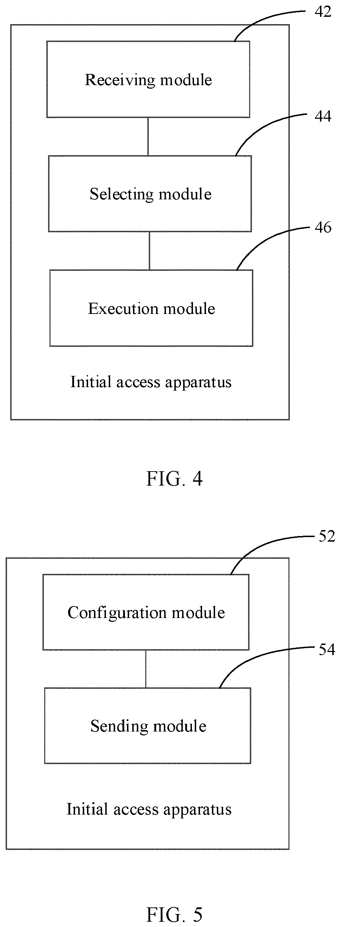

An embodiment of this application provides an initial access apparatus. FIG. 4 is a first schematic structural diagram of an initial access apparatus according to an embodiment of this application, applied to a terminal. As shown in FIG. 4, the apparatus includes:
a receiving module 42, configured to receive a configuration message sent by a network-side device, where the configuration message includes a plurality of initial access resources, and the plurality of initial access resources are configured for different categories of terminals by the network-side device;
a selecting module 44, configured to select, from the plurality of initial access resources, an initial access resource corresponding to a category of the terminal; and
an execution module 46, configured to perform an initial access operation based on the selected initial access resource.

Optionally, the terminal in this embodiment of this application may include a first-category terminal and a second-category terminal.

Based on this, in a case that a terminal selecting the initial access resource is a first-category terminal, the selecting module 44 in this embodiment of this application includes at least one of the following:
a first selecting unit, configured to select, from the plurality of initial access resources, an initial access resource corresponding to the first-category terminal, where the initial access resource selected by the first-category terminal is different from an initial access resource selected by the second-category terminal;
a second selecting unit, configured to select, based on an attribute of the first-category terminal, a corresponding initial access resource from the plurality of initial access resources, where the attribute of the first-category terminal includes at least one of the following: capability of the first-category terminal, capability set of the first-category terminal, feature of the first-category terminal, feature set of the first-category terminal, category of the first-category terminal, type of the first-category terminal, application scenario of the first-category terminal, and subscription information of the first-category terminal;
a third selecting unit, configured to select, according to a correspondence between identifiers of the first-category terminals and initial access resources, a corresponding initial access resource from the plurality of initial access resources;
a fourth selecting unit, configured to select, according to a preset weight of the first-category terminal on a corresponding initial access resource, an initial access resource with a preset weight greater than a preset threshold from the plurality of initial access resources;
a fifth selecting unit, configured to select, from the plurality of initial access resources, an initial access resource whose preset weight is greater than the preset threshold and that satisfies the correspondence; and
a sixth selecting unit, configured to select, according to a correspondence between initial access resources and cell identifiers or public land mobile network PLMN identifiers of cells in which the first-category terminals are located, a corresponding initial access resource from the plurality of initial access resources.

Optionally, the configuration message in this embodiment of this application further includes a first indication message, the first indication message is used to indicate a correspondence between the initial access resources and terminal categories, and the selecting module is further configured to select, according to the correspondence, an initial access resource corresponding to a category of the terminal.

Optionally, the configuration message in this embodiment of this application further includes a second indication message, and the second indication message is used to indicate an initial access resource of the first-category terminal.

Optionally, the configuration message in this embodiment of this application further includes a third indication message, and the third indication message is used to indicate an initial access operation to be performed by using an initial access resource of the first-category terminal.

Optionally, the initial access operation in this embodiment of this application may include at least one of the following: camping, receiving system information, monitoring a paging message, monitoring advance indication information, and random access.

Optionally, in this application, in a case that a terminal selecting the initial access resource is a first-category terminal, the performing an initial access operation based on the selected initial access resource includes:
receiving system information and monitoring a paging message based on a selected first initial access resource, and performing random access based on a selected second initial access resource; where the first initial access resource is the same as a resource used for receiving system information and monitoring a paging message by the second-category terminal, and the second initial access resource is different from a resource used for random access of the second-category terminal.

Optionally, in a case that a terminal selecting the initial access resource is a first-category terminal, the selecting module is further configured to receive system information based on a selected third initial access resource, and perform random access and monitor a paging message based on a selected fourth initial access resource; where the third initial access resource is the same as a resource used for receiving system information by the second-category terminal, and the fourth initial access resource is different from a resource used for random access and monitoring a paging message by the second-category terminal.

Optionally, the initial access resource in this embodiment of this application includes at least one of the following: a synchronization signal block SSB, a synchronization signal block based measurement timing configuration SMTC, a search space, a control resource set CORESET, an uplink bandwidth part BWP, a downlink bandwidth part BWP, and a reference signal RS.

Optionally, the configuration message in this embodiment of this application is carried by at least one of the following: a physical broadcast channel PBCH, a master information block MIB, a first SIB system information block, extended system information, and a dedicated RRC message; where the first SIB is a SIB corresponding to the second-category terminal.

Optionally, the extended system information in this embodiment of this application includes at least one of the following:
(1) system information corresponding to the first-category terminal in a first SIB 1, where the first SIB 1 is a SIB in the first SIB, and the first SIB is the SIB corresponding to the second-category terminal;
(2) system information corresponding to the first-category terminal in a SIBx, where x is an integer greater than 1, the SIBx belongs to a second SIB, and the second SIB is a SIB corresponding to the first-category terminal; and
(3) system information corresponding to the first-category terminal in a SIBy, where y is an integer greater than 1, the SIBy is a SIB in the first SIB, the first SIB is the SIB corresponding to the second-category terminal, and the SIBy includes system information corresponding to the second- category terminal.

The system information corresponding to the first-category terminal in the first SIB1 is used to indicate any one of the following: system information supporting the first-category terminal; and system information allowing access or camping of the first-category terminal.

The system information corresponding to the first-category terminal in the SIBx and SIBy is used to indicate system information required by the first-category terminal for accessing a cell in which the first-category terminal is located.

The foregoing describes this application from a terminal side, and the following describes this application from a network-side device.

An embodiment of this application further provides an initial access apparatus. FIG. 5 is a second schematic structural diagram of an initial access apparatus according to an embodiment of this application, applied to a network-side device. As shown in FIG. 5, the apparatus includes:
a configuration module 52, configured to configure a plurality of initial access resources for different categories of terminals; and
a sending module 54, configured to send messages to the different categories of terminals, where the configuration message is used to indicate that the network-side device configures the plurality of initial access resources for the different categories of terminals.

Optionally, the configuration message in this embodiment of this application is carried by at least one of the following: a physical broadcast channel PBCH, a master information block MIB, a first SIB system information block, extended system information, and a dedicated RRC message; where
the terminal includes a first-category terminal and a second-category terminal, and the first SIB is a SIB corresponding to the second-category terminal.

Optionally, the extended system information includes at least one of the following:
(1) system information corresponding to the first-category terminal in a first SIB 1, where the first SIB 1 is a SIB in the first SIB, and the first SIB is the SIB corresponding to the second-category terminal;
(2) system information corresponding to the first-category terminal in a SIBy, where y is an integer greater than 1, the SIBy is a SIB in the first SIB, the first SIB is the SIB corresponding to the second-category terminal, and the SIBy includes or does not include system information corresponding to the second-category terminal; and
(3) system information corresponding to the first-category terminal in a SIBx, where x is an integer greater than 1, the SIBx belongs to a second SIB, and the second SIB is a SIB corresponding to the first-category terminal.

Optionally, the system information corresponding to the first-category terminal in the first SIB 1 is used to indicate any one of the following: system information supporting the second-category terminal; and system information allowing access or camping of the second-category terminal.

Optionally, the system information corresponding to the first-category terminal in the SIBx and SIBy is used to indicate system information required by the first-category terminal for accessing a cell in which the first-category terminal is located.

Optionally, the configuration message further includes at least one of a first indication message, a second indication message, and a third indication message, where the first indication message is used to indicate a correspondence between the initial access resources and terminal categories, the second indication message is used to indicate an initial access resource of the first-category terminal, and the third indication message is used to indicate an initial access operation to be performed by using the initial access resource of the first-category terminal.

In this embodiment of this application, after the network-side device sends a configuration message, the terminal may select, from a plurality of initial access resources, an initial access resource corresponding to a category of the terminal, and then performs an initial access operation based on the selected initial access resource. In other words, the terminal may select, from the plurality of initial access resources, the initial access resource corresponding to the category of the terminal, without occupying initial access resources of other categories of terminals. This resolves the prior-art problem that performance of different categories of terminals in an initial access process is affected because all categories of terminals share same initial access resources, thereby achieving the effect of load balance on the network side.

The initial access apparatus in the embodiments of this application may be an apparatus, or may be a component, an integrated circuit, or a chip in a terminal. The apparatus may be a mobile terminal or a non-mobile terminal. For example, the mobile terminal may include but is not limited to the categories of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in the embodiments of this application.

The initial access apparatus in the embodiments of this application may be an apparatus with an operating system. The operating system may be an Android (Android) operating system, may be an iOS operating system, or may be another possible operating system, which is not specifically limited in the embodiments of this application.

The initial access apparatus provided in the embodiments of this application can implement the processes that are implemented in the method embodiments of FIG. 2 and FIG. 3, with the same technical effects achieved. To avoid repetition, details are not described herein again.

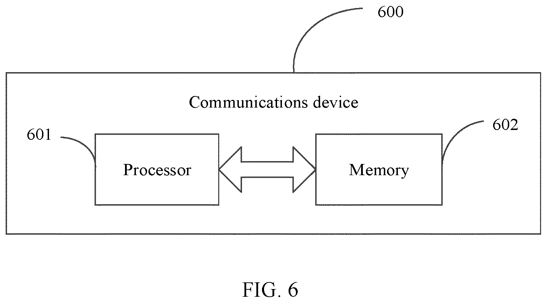

Optionally, as shown in FIG. 6, an embodiment of this application further provides a communications device 600, including a processor 601, a memory 602, and a program or instructions stored in the memory 602 and capable of running on the processor 601. For example, if the communications device 600 is a terminal, when the program or instructions are executed by the processor 601, the processes of the foregoing embodiments of the initial access method are implemented, with the same technical effects achieved. If the communications device 600 is a network-side device, when the program or instructions are executed by the processor 601, the processes of the foregoing embodiments of the initial access method are implemented, with the same technical effects achieved. To avoid repetition, details are not described herein again.

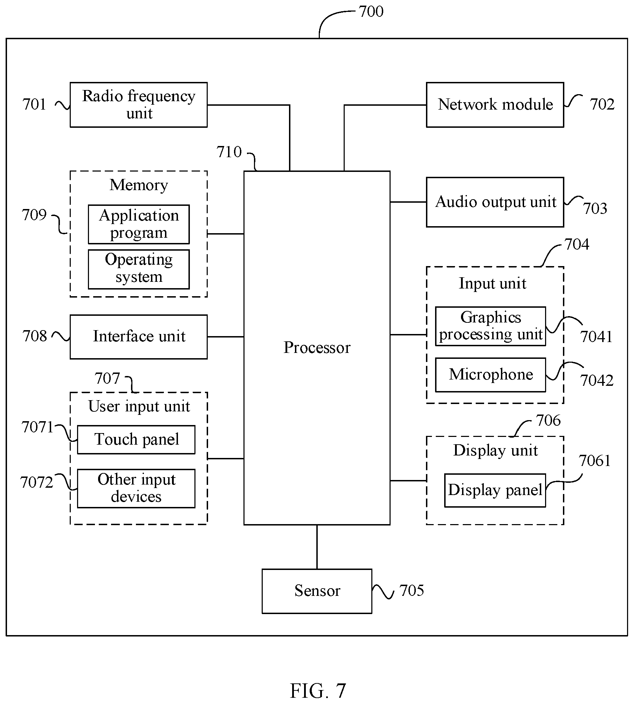

FIG. 7 is a schematic diagram of a hardware structure of a terminal implementing an embodiment of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the terminal 700 may further include a power supply (such as a battery) for supplying power to the components. The power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in FIG. 7, or combine some of the components, or arrange the components differently. Details are not described herein again.

It should be understood that in this embodiment of this application, the input unit 704 may include a graphics processing unit (Graphics Processing Unit, GPU) 7041 and a microphone 7042. The graphics processing unit 7041 processes image data of a static picture or a video that is obtained by an image capture apparatus (for example, a camera) in a video capture mode or an image capture mode. The display unit 706 may include a display panel 7061, and the display panel 7061 may be configured in a form of a liquid crystal display, an organic light-emitting diode, or the like. The user input unit 707 includes a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a functional button (such as a volume control button or a power on/off button), a trackball, a mouse, and a joystick. Details are not described herein again.

In this embodiment of this application, the radio frequency unit 701 sends downlink data received from a network-side device to the processor 710 for processing, and in addition, sends uplink data to the network-side device. Generally, the radio frequency unit 701 includes but is not limited to an antenna, at least one amplifier, a transceiver, a coupler, a low noise amplifier, and a duplexer.

The memory 709 may be configured to store a software program or instructions and various data. The memory 709 may mainly include a program or instruction storage area and a data storage area. The program or instruction storage area may store an operating system, an application program or instructions required by at least one function (for example, a sound play function and an image play function), and the like. In addition, the memory 709 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or other non-volatile solid-state storage devices.

The processor 710 may include one or more processing units. Optionally, the processor 710 may integrate an application processor and a modem processor. The application processor mainly processes an operating system, a user interface, an application program or instructions, and the like. The modem processor mainly processes wireless communication, for example, a baseband processor. It can be understood that the modem processor may alternatively be not integrated in the processor 710.

The radio frequency unit 701 is configured to receive a configuration message sent by the network-side device, where the configuration message includes a plurality of initial access resources, and the plurality of initial access resources are configured for different categories of terminals by the network-side device.

The processor 710 is configured to select, from the plurality of initial access resources, an initial access resource corresponding to a category of the terminal, and perform an initial access operation based on the selected initial access resource.

After the network-side device sends a configuration message, the terminal may select, from a plurality of initial access resources, an initial access resource corresponding to a category of the terminal, and then performs an initial access operation based on the selected initial access resource. In other words, the terminal may select, from the plurality of initial access resources, the initial access resource corresponding to the category of the terminal, without occupying initial access resources of other categories of terminals. This resolves the prior-art problem that performance of different categories of terminals in an initial access process is affected because all categories of terminals share same initial access resources.

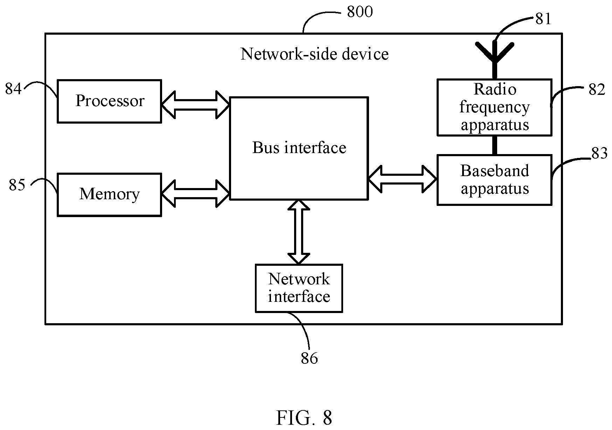

Specifically, an embodiment of this application further provides a network-side device. As shown in FIG. 8, the network side device 800 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information by using the antenna 81.

The frequency band processing apparatus may be located in the baseband apparatus 83. The method performed by the network-side device in the foregoing embodiment may be implemented in the baseband apparatus 83, and the baseband apparatus 83 includes a processor 84 and a memory 85.

The baseband apparatus 83 may include, for example, at least one baseband processing unit, where a plurality of chips are disposed on the baseband processing unit. As shown in FIG. 8, one of the chips is, for example, the processor 84, and connected to the memory 85, to invoke the program in the memory 85 to perform the operations of the network device shown in the foregoing method embodiment.

The baseband apparatus 83 may further include a network interface 86, configured to exchange information with the radio frequency apparatus 82, where the interface is, for example, a common public radio interface (common public radio interface, CPRI).

Specifically, the network-side device in this embodiment of this application further includes instructions or a program stored in the memory 85 and capable of running on the processor 84. The processor 84 invokes the instructions or program in the memory 85 to perform the method performed by the modules shown in FIG. 2 or FIG. 3, with the same technical effects achieved. To avoid repetition, details are not described herein.

An embodiment of this application further provides a readable storage medium, where the readable storage medium stores a program or instructions, and when the program or instructions are executed by a processor, the processes of the foregoing embodiments of the initial access method are implemented, with the same technical effects achieved. To avoid repetition, details are not described herein again.

The processor is the processor in the terminal in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, where the chip includes a processor and a communications interface, the communications interface is coupled to the processor, and the processor is configured to run a program or instructions of a network-side device to implement the processes of the foregoing embodiments of the initial access method, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product, where the computer program product is stored in a non-volatile readable storage medium, and the computer program product is executed by at least one processor to implement the processes of the foregoing embodiments of the initial access method, with the same technical effects achieved. To avoid repetition, details are not described herein again.

It should be noted that, in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such process, method, article, or apparatus. In the absence of more restrictions, an element preceded by the statement "includes a ..." does not preclude the existence of other identical elements in the process, method, article, or apparatus that includes the element. In addition, it should be noted that the scopes of the method and apparatus in the implementations of this application are not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

By means of the foregoing description of the implementations, a person skilled in the art may clearly understand that the method in the foregoing embodiments may be implemented by software with a necessary general hardware platform. Certainly, the method in the foregoing embodiments may alternatively be implemented by hardware. However, in many cases, the former is a preferred implementation. Based on such understanding, the technical solutions of this application essentially or a part thereof that contributes to the prior art may be implemented in a form of a software product. The computer software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific implementations. The foregoing specific implementations are merely illustrative rather than restrictive. As instructed by this application, a person of ordinary skill in the art may develop many other manners without departing from the essence of this application and the protection scope of the claims, and all such manners shall fall within the protection scope of this application.

## Claims

1. An initial access method, applied to a terminal and comprising:
receiving a configuration message sent by a network-side device, wherein the configuration message comprises a plurality of initial access resources, and the plurality of initial access resources are configured for different categories of terminals by the network-side device;
selecting, from the plurality of initial access resources, an initial access resource corresponding to a category of the terminal; and
performing an initial access operation based on the selected initial access resource.

2. The method according to claim 1, wherein the terminal comprises a first-category terminal and a second-category terminal.

3. The method according to claim 2, wherein in a case that a terminal selecting the initial access resource is a first-category terminal, the selecting, from the plurality of initial access resources, an initial access resource corresponding to a category of the terminal comprises at least one of the following:
selecting, from the plurality of initial access resources, an initial access resource corresponding to the first-category terminal, wherein the initial access resource selected by the first-category terminal is different from an initial access resource selected by the second-category terminal;
selecting, based on an attribute of the first-category terminal, a corresponding initial access resource from the plurality of initial access resources, wherein the attribute of the first-category terminal comprises at least one of the following: capability of the first-category terminal, capability set of the first-category terminal, feature of the first-category terminal, feature set of the first-category terminal, category of the first-category terminal, type of the first-category terminal, application scenario of the first-category terminal, and subscription information of the first-category terminal;
selecting, according to a correspondence between identifiers of the first-category terminals and initial access resources, a corresponding initial access resource from the plurality of initial access resources;
selecting, based on a preset weight of the first-category terminal on a corresponding initial access resource, an initial access resource with a preset weight greater than a preset threshold from the plurality of initial access resources;
selecting, from the plurality of initial access resources, an initial access resource whose preset weight is greater than the preset threshold and that satisfies the correspondence; and
selecting, according to a correspondence between initial access resources and cell identifiers or public land mobile network PLMN identifiers of cells in which the first-category terminals are located, a corresponding initial access resource from the plurality of initial access resources.

4. The method according to claim 1, wherein the configuration message further comprises a first indication message, the first indication message is used to indicate a correspondence between the initial access resources and terminal categories, and the selecting an initial access resource from the plurality of initial access resources comprises:
selecting, according to the correspondence, an initial access resource corresponding to a category of the terminal.

5. The method according to claim 2, wherein the configuration message further comprises a second indication message, and the second indication message is used to indicate an initial access resource of the first-category terminal.

6. The method according to claim 2, wherein the configuration message further comprises a third indication message, and the third indication message is used to indicate an initial access operation to be performed by using an initial access resource of the first-category terminal.

7. The method according to claim 2, wherein the initial access operation comprises at least one of the following:
camping, receiving system information, monitoring a paging message, monitoring advance indication information, and random access.

8. The method according to claim 7, wherein in a case that a terminal selecting the initial access resource is a first-category terminal, the performing an initial access operation based on the selected initial access resource comprises:
receiving system information and monitoring a paging message based on a selected first initial access resource, and performing random access based on a selected second initial access resource; wherein the first initial access resource is the same as a resource used for receiving system information and monitoring a paging message by the second-category terminal, and the second initial access resource is different from a resource used for random access of the second-category terminal.

9. The method according to claim 7, wherein in a case that a terminal selecting the initial access resource is a first-category terminal, the performing an initial access operation based on the selected initial access resource comprises:
receiving system information based on a selected third initial access resource, and performing random access and monitoring a paging message based on a selected fourth initial access resource; wherein the third initial access resource is the same as a resource used for receiving system information by the second-category terminal, and the fourth initial access resource is different from a resource used for random access and monitoring a paging message by the second-category terminal.

10. The method according to any one of claims 1 to 9, wherein the initial access resource comprises at least one of the following:
a synchronization signal block SSB, a synchronization signal block based measurement timing configuration SMTC, a search space, a control resource set CORESET, an uplink bandwidth part BWP, a downlink bandwidth part BWP, and a reference signal RS.

11. The method according to any one of claims 2 to 9, wherein the configuration message is carried by at least one of the following: a physical broadcast channel PBCH, a master information block MIB, a first system information block SIB, extended system information, and a dedicated RRC message; wherein
the first SIB is a SIB corresponding to the second-category terminal.

12. The method according to claim 11, wherein the extended system information comprises at least one of the following:
system information corresponding to the first-category terminal in a first SIB 1, wherein the first SIB1 is a SIB in the first SIB, and the first SIB is the SIB corresponding to the second-category terminal;
system information corresponding to the first-category terminal in a SIBx, wherein x is an integer greater than 1, the SIBx belongs to a second SIB, and the second SIB is a SIB corresponding to the first-category terminal; and
system information corresponding to the first-category terminal in a SIBy, wherein y is an integer greater than 1, the SIBx is a SIB in the first SIB, and the first SIB is the SIB corresponding to the second-category terminal.

13. An initial access method, applied to a network-side device and comprising:
configuring a plurality of initial access resources for different categories of terminals; and
sending a configuration message to the different categories of terminals, wherein the configuration message is used to indicate that the network-side device has configured a plurality of initial access resources for the different categories of terminals.

14. The method according to claim 13, wherein the configuration message is carried by at least one of the following: a physical broadcast channel PBCH, a master information block MIB, a first system information block SIB, extended system information, and a dedicated RRC message; wherein
the terminal comprises a first-category terminal and a second-category terminal, and the first SIB is a SIB corresponding to the second-category terminal.

15. The method according to claim 14, wherein the extended system information comprises at least one of the following:
system information corresponding to the first-category terminal in a first SIB 1, wherein the first SIB1 is a SIB in the first SIB, and the first SIB is the SIB corresponding to the second-category terminal;
system information corresponding to the first-category terminal in a SIBx, wherein x is an integer greater than 1, the SIBx belongs to a second SIB, and the second SIB is a SIB corresponding to the first-category terminal; and
system information corresponding to the first-category terminal in a SIBy, wherein y is an integer greater than 1, the SIBy is a SIB in the first SIB, and the first SIB is the SIB corresponding to the second-category terminal.

16. The method according to claim 15, wherein the system information corresponding to the first-category terminal in the first SIB 1 is used to indicate any one of the following:
system information supporting the first-category terminal; and
system information allowing access or camping of the first-category terminal.

17. The method according to claim 16, wherein the system information corresponding to the first-category terminal in the SIBx and SIBy is used to indicate system information required by the first-category terminal for accessing a cell in which the first-category terminal is located.

18. The method according to claim 14, wherein the configuration message further comprises at least one of a first indication message, a second indication message, and a third indication message, wherein
the first indication message is used to indicate a correspondence between the initial access resources and terminal categories, the second indication message is used to indicate an initial access resource of the first-category terminal, and the third indication message is used to indicate an initial access operation to be performed by using the initial access resource of the first-category terminal.

19. An initial access apparatus, comprising:
a receiving module, configured to receive a configuration message sent by a network-side device, wherein the configuration message comprises a plurality of initial access resources, and the plurality of initial access resources are configured for different categories of terminals by the network-side device;
a selecting module, configured to select, from the plurality of initial access resources, an initial access resource corresponding to a category of the terminal; and
an execution module, configured to perform an initial access operation based on the selected initial access resource.

20. The apparatus according to claim 19, wherein the terminal comprises a first-category terminal and a second-category terminal.

21. The apparatus according to claim 20, wherein in a case that a terminal selecting the initial access resource is a first-category terminal, the selecting module comprises at least one of the following:
a first selecting unit, configured to select, from the plurality of initial access resources, an initial access resource corresponding to the first-category terminal, wherein the initial access resource selected by the first-category terminal is different from an initial access resource selected by the second-category terminal;
a second selecting unit, configured to select, based on an attribute of the first-category terminal, a corresponding initial access resource from the plurality of initial access resources, wherein the attribute of the first-category terminal comprises at least one of the following: capability of the first-category terminal, capability set of the first-category terminal, feature of the first-category terminal, feature set of the first-category terminal, category of the first-category terminal, type of the first-category terminal, application scenario of the first-category terminal, and subscription information of the first-category terminal;
a third selecting unit, configured to select, according to a correspondence between an identifier of the first-category terminal and an initial access resource, a corresponding initial access resource from the plurality of initial access resources;
a fourth selecting unit, configured to select, based on a preset weight of the first-category terminal on a corresponding initial access resource, an initial access resource with a preset weight greater than a preset threshold from the plurality of initial access resources;
a fifth selecting unit, configured to select, from the plurality of initial access resources, an initial access resource whose preset weight is greater than the preset threshold and that satisfies the correspondence; and
a sixth selecting unit, configured to select, according to a correspondence between initial access resources and cell identifiers or public land mobile network PLMN identifiers of cells in which the first-category terminals are located, a corresponding initial access resource from the plurality of initial access resources.

22. The apparatus according to claim 20, wherein the configuration message further comprises a first indication message, the first indication message is used to indicate a correspondence between the initial access resources and terminal categories, and the selecting module is further configured to select, according to the correspondence, an initial access resource corresponding to a category of the terminal.

23. The apparatus according to claim 20, wherein the configuration message further comprises a second indication message, and the second indication message is used to indicate an initial access resource of the first-category terminal.

24. The apparatus according to claim 20, wherein the configuration message further comprises a third indication message, and the third indication message is used to indicate an initial access operation to be performed by using an initial access resource of the first-category terminal.

25. The apparatus according to claim 20, wherein the initial access operation comprises at least one of the following:
camping, receiving system information, monitoring a paging message, monitoring advance indication information, and random access.

26. The apparatus according to claim 25, wherein in a case that a terminal selecting the initial access resource is a first-category terminal,
the selecting module is further configured to receive system information and monitor a paging message based on a selected first initial access resource, and perform random access based on a selected second initial access resource; wherein the first initial access resource is the same as a resource used for receiving system information and monitoring a paging message by the second-category terminal, and the second initial access resource is different from a resource used for random access of the second-category terminal.

27. The apparatus according to claim 25, wherein in a case that a terminal selecting the initial access resource is a first-category terminal,
the selecting module is further configured to receive system information based on a selected third initial access resource, and perform random access and monitor a paging message based on a selected fourth initial access resource; wherein the third initial access resource is the same as a resource used for receiving system information by the second-category terminal, and the fourth initial access resource is different from a resource used for random access and monitoring a paging message by the second-category terminal.

28. The apparatus according to any one of claims 19 to 27, wherein the initial access resource comprises at least one of the following:
a synchronization signal block SSB, a synchronization signal block based measurement timing configuration SMTC, a search space, a control resource set CORESET, an uplink bandwidth part BWP, a downlink bandwidth part BWP, and a reference signal RS.

29. The apparatus according to any one of claims 20 to 27, wherein the configuration message is carried by at least one of the following: a physical broadcast channel PBCH, a master information block MIB, a first system information block SIB, extended system information, and a dedicated RRC message; wherein
the first SIB is a SIB corresponding to the second-category terminal.

30. The apparatus according to claim 29, wherein the extended system information comprises at least one of the following:
system information corresponding to the first-category terminal in a first SIB 1, wherein the SIB 1 is a SIB in the first SIB, and the first SIB is the SIB corresponding to the second-category terminal;
system information corresponding to the first-category terminal in a SIBx, wherein x is an integer greater than 1, the SIBx belongs to a second SIB, and the second SIB is a SIB corresponding to the first-category terminal; and
system information corresponding to the first-category terminal in a SIBy, wherein y is an integer greater than 1, the SIBx is a SIB in the first SIB, and the first SIB is the SIB corresponding to the second-category terminal.

31. An initial access apparatus, comprising:
a configuration module, configured to configure a plurality of initial access resources for different categories of terminals; and
a sending module, configured to send a configuration message to the different categories of terminals, wherein the configuration message is used to indicate that a network-side device has configured a plurality of initial access resources for the different categories of terminals.

32. The apparatus according to claim 31, wherein the configuration message is carried by at least one of the following: a physical broadcast channel PBCH, a master information block MIB, a first system information block SIB, extended system information, and a dedicated RRC message; wherein
the terminal comprises a first-category terminal and a second-category terminal, and the first SIB is a SIB corresponding to the second-category terminal.

33. The apparatus according to claim 32, wherein the extended system information comprises at least one of the following:
system information corresponding to the first-category terminal in a first SIB 1, wherein the first SIB1 is a SIB in the first SIB, and the first SIB is the SIB corresponding to the second-category terminal;
system information corresponding to the first-category terminal in a SIBx, wherein x is an integer greater than 1, the SIBx belongs to a second SIB, and the second SIB is a SIB corresponding to the first-category terminal; and
system information corresponding to the first-category terminal in a SIBy, wherein y is an integer greater than 1, the SIBy is a SIB in the first SIB, and the first SIB is the SIB corresponding to the second-category terminal.

34. The apparatus according to claim 33, wherein the system information corresponding to the first-category terminal in the first SIB1 is used to indicate any one of the following:
system information supporting the second-category terminal; and
system information allowing access or camping of the second-category terminal.

35. The apparatus according to claim 34, wherein the system information corresponding to the first-category terminal in the SIBx and SIBy is used to indicate system information required by the first-category terminal for accessing a cell in which the first-category terminal is located.

36. The apparatus according to claim 32, wherein the configuration message further comprises at least one of a first indication message, a second indication message, and a third indication message, wherein
the first indication message is used to indicate a correspondence between the initial access resources and terminal categories, the second indication message is used to indicate an initial access resource of the first-category terminal, and the third indication message is used to indicate an initial access operation to be performed by using the initial access resource of the first-category terminal.

37. A terminal, comprising a processor, a memory, and a program or instructions stored in the memory and capable of running on the processor, wherein when the program or instructions are executed by the processor, the steps of the initial access method according to any one of claims 1 to 12 are implemented.

38. A network-side device, comprising a processor, a memory, and a program or instructions stored in the memory and capable of running on the processor, wherein when the program or instructions are executed by the processor, the steps of the initial access method according to any one of claims 13 to 18 are implemented.

39. A readable storage medium, wherein the readable storage medium stores a program or instructions, and when the program or instructions are executed by a processor, the initial access method according to any one of claims 1 to 12 or the steps of the initial access method according to any one of claims 13 to 18 are implemented.

40. A chip, wherein the chip comprises a processor and a communications interface, the communications interface is coupled to the processor, and the processor is configured to run a program or instructions to implement the initial access method according to any one of claims 1 to 12 or the initial access method according to any one of claims 13 to 18.

41. A computer program product, wherein the computer program product is stored in a non-volatile readable storage medium, and the computer program product is executed by at least one processor to implement the initial access method according to any one of claims 1 to 12 or the initial access method according to any one of claims 13 to 18.

42. A communications device, wherein the communications device is configured to perform the initial access method according to any one of claims 1 to 12 or the initial access method according to any one of claims 13 to 18.
